# EUROPEAN PATENT APPLICATION

(11) **EP 2 980 950 A1**
(43) Date of publication of application: **03.02.2016**
(21) Application number: 13879692.5
(22) Date of filing: 28.03.2013
(51) Int. Cl.: H02J 7/00, H02J 9/06

(54) **POWER SUPPLY CONTROL DEVICE**

(71) Applicant: The Chugoku Electric Power Co., Inc., Hiroshima-shi, Hiroshima 730-8701 (JP)
(72) Inventor: KOUNO, Nobuyuki, Hiroshima-shi Hiroshima 730-8701 (JP); OKUBO, Norihiro, Hiroshima-shi Hiroshima 730-8701 (JP); NAITO, Masaki, Hiroshima-shi Hiroshima 730-8701 (JP); UMAKOSHI, Yuji, Hiroshima-shi Hiroshima 730-0855 (JP); FUJII, Seiichiro, Hiroshima-shi Hiroshima 730-0855 (JP)
(74) Representative: Portch, Daniel
(86) International application number: PCT/JP2013/059366
(87) International publication number: WO 2014/155626

(57) **Abstract**

To prevent more than necessary restrictions on the addition of a load connected to a power source device due to a priority set for the load when the power consumption of loads connected to the power source device varies. [Solution] When a total of power consumption by the loads connected to a power source supply device (3) decreases during a power outage, in the case of prioritized loads which have a priority set, loads to be additionally connected are identified in order of the priority, whereas when the total power consumption of the identified loads exceeds the upper output limit of the power source supply device (3), loads to be identified in order of priority are skipped and an attempt is made to identify a load with a lower priority. In the case of non-prioritized loads which do not have a priority set, the loads to be additionally connected are identified in ascending order of power consumption. When the total power consumption by the loads connected to the power source supply device (3) increases and exceeds the upper output limit of the power source supply device (3), the non-prioritized loads are disconnected in descending order of power consumption, while the prioritized loads are disconnected in ascending order of priority.

## Description

### [Technical Field]

The present invention relates to a power supply control device which controls power supplied from a power source device to each load.

### [Background Art]

Recently, there has become widely used a system which supplies power to loads with a power source device where consumers utilize a power source device such as, for example, a rechargeable battery of an electric vehicle, a power generator and the like when power supply from the power system stops due to power outage and the like.

According to such a system, the amount of electric power which can be obtained from the power source device is small compared to the amount of electric power which can be obtained from the power system so that although electric power sufficient for operating all the loads had been obtained from the power system before a power outage, electric power sufficient for operating all the loads may not be able to be obtained from the power source device during the power outage.

There is known a technology which takes the above into consideration and limits the loads to be supplied the power from the power source device during a power outage. For example the power supply system disclosed in PTL 1 divides the plurality of loads held by the residences into load group LA and load group LB and supplies power from the battery to only the load group LB during a power outage. Further, this power supply system prioritizes the plurality of loads included in the load group LB, and estimates the amount of power remaining based on the remaining battery capacity and the estimated power consumption of each load so to thereby supply power to only the loads with high priority when the amount of power remaining is small.

Further the control system disclosed in PTL 2 sets the generating units as the target from which power is to be supplied in a descending order of priority of the electricity loads when the output of the generating unit is lower than the estimated power demand, and selects the power loads such that the total estimated power demand does not exceed the total output of the generating units and the like.

### [Citation List]

### [Patent Literature]

[PTL 1]
   Japanese Patent Application Laid-open Publication No. 2007-236023
[PTL 2]
   Japanese Patent Application Laid-open Publication No. 2008-11612

### [Summary of Invention]

### [Technical Problem]

By the way, there is a case where the power consumed by a load decreases according to the operating condition of the load while the load is operated by power supplied from the power source device during a power outage. When the power available to the power source device is created by such reduction in the power consumed by the load, it is preferable that the power supplied by the power source device is utilized effectively as much as possible or the number of loads additionally connected to the power source device is set within the limits of the amount of power remaining in order to operate as many loads as possible.

However, as explained in the following, there is a problem that the load additionally connected to the power source device would be limited beyond necessity in a case where the loads are just additionally connected to the power source device according to priority.

For example, assume that there were loads M1, M2, M3 and M4 in this order of priority. And during a power outage, since the output capacity of the power source device and the power consumption by the loads M1 to M4 were compared to show that the loads capable of being supplied power within the output capacity range of the power source device were loads M1 and M2, only loads M1 and M2 were connected to the power source device. In such a circumstance, when the power consumption by loads M1 or M2 were to decline during a power outage creating power available to the power source device, and a load were to be additionally connected to the power source device just according to priority, the target to be additionally connected would be load M3. However, when the power consumption by load M3 were to exceed the power remaining in power source device, load M3 would not be connected. And in this case, load M4 being of lower priority than load M3 would also not be connected. But there can be considered a case where the power consumption by load M4 was within the power remaining in the power source device even if the power consumed by load M3 exceeds the power remaining in the power source device. In such a case, it is preferable to additionally connect load M4 to the power source device from the viewpoint of encouraging effective use of the power from the power source device or improving the convenience of the users by operating as many loads as possible.

Further, there is a case where there are prioritized loads and non-prioritized loads which do not have priority assigned. And also in such case, when the loads are just additionally connected to the power source device according to priority, the loads not having priority assigned would not be connected to the power source device even if the power consumption by the loads is to decline during a power outage creating extra power in the power source device. However, there can be considered a case where there is a load whose power consumption is within the power remaining in the power source device among the loads that are not assigned priority. In such case, it is preferable that this load is additionally connected to the power source device from the above mentioned viewpoint.

Furthermore, when the power consumption by the loads were to increase during a power outage having a possibility to exceed the output capacity of the power source device, the loads would be shut off from the power source device in an ascending order of priority. And as a result of shutting off the loads, power may be made available to the power source device at this time. And in this case, when there are not yet connected loads whose power consumption is within the power remaining in the power source device, it is preferable for such loads to be additionally connected.

The present invention has been made in view of such background and an object thereof is to provide a power supply control device which can prevent the loads additionally connected to the power source device from being limited beyond necessity due to the priority assigned to the loads, in a case the power consumption by the loads connected to the power source device have changed.

### [Solution to Problem]

In order to solve the above described problem, the first power supply control device of the present invention is a power supply control device that controls power supply from a power source device to a plurality of loads including a circuit configured to parallely connect the plurality of loads to the power source device, a plurality of switches provided to the circuit, the switches being configured to respectively switch between a connection and a shut off between the power source device and the plurality of loads, a priority setting unit configured to assign priorities to the plurality of loads, a power detection unit configured to detect a change in a total power consumption by loads that are connected to the power source device among the plurality of loads, a load identifying unit configured to repeatedly perform a load identifying process on all loads shut off from the power source device among the plurality of loads, based on a detection result of the power detection unit, the load identifying process selecting one load according to the priority when the total power consumption by the loads connected to the power source device has decreased, identifying the selected load as a connection target when a total power consumption by the selected load, a load that is already identified as a connection target and the loads that are connected to the power source device is not greater than an upper output limit that is set according to an output capacity of the power source device, and does not identify the selected load as the connection target when the total power consumption by the selected load, the load that is already identified as the connection target and the loads that are connected to the power source device is greater than the upper output limit, and a changeover control unit configured to control a changeover of the switch corresponding to the load that is identified as the connection target by the load identifying unit and to connect to the power source device the load that is identified as the connection target.

Additionally, in the second power supply control device of the present invention, the aforementioned first power supply control device of the present invention is characterized to when the detection result of the power detection unit indicates that the total power consumption by the loads connected to the power source device has increased to exceed the upper output limit, the load identifying unit identifies as a shut off target a load with a lowest priority among the loads that are connected to the power source device and the changeover control unit controls changeover of the switch that corresponds to the load that is identified as the shut off target by the load identifying unit and shuts off from the power source device the load that is identified as the shut off target.

Additionally, in the third power supply control device of the present invention, the aforementioned second power supply control device of the present invention is characterized to when the total power consumption by the loads that are connected to the power source device after the load has been shut off from the power source device by the changeover control unit is less than the upper output limit, the load identifying unit performs the load identifying process and the changeover control unit connects to the power source device the load that is identified as the connection target by the load identifying process.

Additionally, in the fourth power supply control device of the present invention, the aforementioned any one of the first to third power supply control devices of the present invention is characterized to further include a measuring unit configured to measure the power consumption by the loads and a storage unit configured to store measurements, of the power consumption by the loads, measured by the measuring unit wherein the load identifying unit calculates the total power consumption using the measurements, of the power consumption by the loads, measured by the measuring unit and stored in the storage unit.

In order to solve the above mentioned problem, the fifth power supply control device of the present invention is a power supply control device that controls power supply from a power source device to a plurality of loads including a circuit configured to parallely connect the plurality of loads to the power source device, a plurality of switches provided to the circuit, the switches being configured to respectively switch between a connection and a shut off between the power source device and the plurality of loads, a priority setting unit configured to set as prioritized loads to a number of loads of the plurality of loads, set as non-prioritized loads to a remainder of the plurality of loads and assign priorities to only the prioritized loads, a power detection unit configured to detect a change in a total power consumption by loads that are connected to the power source device among the plurality of loads, a prioritized load identifying unit configured to repeatedly perform a prioritized load identifying process on all prioritized loads shut off from the power source device, based on a detection result of the power detection unit, the prioritized load identifying process selecting one prioritized load according to the priority when the total power consumption by the loads connected to the power source device has decreased, identifying the selected prioritized load as a connection target when a total power consumption by the selected prioritized load, a prioritized load that is already identified as a connection target and the loads that are connected to the power source device is not greater than an upper output limit that is set according to an output capacity of the power source device, and does not identify the selected prioritized load as the connection target when the total power consumption by the selected prioritized load, the prioritized load that is already identified as the connection target and the loads that are connected to the power source device is greater than the upper output limit, a non-prioritized load identifying unit configured to repeatedly perform a non-prioritized load identifying process that is performed, after the prioritized load identifying process, on all the prioritized loads shut off from the power source device by the prioritized load identifying unit, the non-prioritized load identifying process selecting in ascending order of power consumption one non-prioritized load from the non-prioritized loads shut off from the power source device and identifying the selected non-prioritized load as the connection target as long as a total power consumption of the selected non-prioritized load, the load that is already identified as the connection target and the loads that are connected to the power source device is not greater than the upper output limit, and a changeover control unit configured to control a changeover of the switch corresponding to the loads that are identified as the connection targets by the prioritized load identifying unit and the non-prioritized load identifying unit, and to connect to the power source device the loads that are identified as the connection targets.

Additionally, in the sixth power supply control device of the present invention, the aforementioned fifth power supply control device of the present invention is characterized to when the detection result of the power detection unit indicates that the total power consumption by the loads connected to the power source device has increased to exceed the upper output limit, the non-prioritized load identifying unit identifies among the non-prioritized loads connected to the power source device a non-prioritized load with a largest power consumption as a shut off target when the non-prioritized load is included in the loads connected to the power source device, and the changeover control unit controls changeover of the switch that corresponds to the non-prioritized load that is identified as the shut off target by the non-prioritized load identifying unit and shuts off from the power source device the non-prioritized load that is identified as the shut off target.

Additionally, in the seventh power supply control device of the present invention, the aforementioned fifth or sixth power supply control device of the present invention is characterized to when the detection result of the power detection unit indicates that the total power consumption by the loads connected to the power source device has increased to exceed the upper output limit, the prioritized load identifying unit identifies among the prioritized loads connected to the power source device a prioritized load with a lowest priority as a shut off target when the loads that are connected to the power source device are all the prioritized loads, and the changeover control unit controls changeover of the switch that corresponds to the prioritized load that is identified as the shut off target by the prioritized load identifying unit and shuts off from the power source device the prioritized load that is identified as the shut off target.

Additionally, in the eighth power supply control device of the present invention, the aforementioned seventh power supply control device of the present invention is characterized to when the total power consumption by the loads that are connected to the power source device after the load has been shut off from the power source device by the changeover control unit is not greater than the upper output limit, the prioritized load identifying unit and the non-prioritized load identifying unit respectively performs the prioritized load identifying process and the non-prioritized load identifying process, and the changeover control unit connects to the power source device the loads respectively identified as connection targets by the prioritized load identifying process and the non-prioritized load identifying process.

Additionally, in the ninth power supply control device of the present invention, the aforementioned any one of the fifth to eighth power supply control devices of the present invention is characterized to further include a measuring unit configured to measure the power consumption by the loads and a storage unit configured to store measurements, of the power consumption by the loads, measured by the measuring unit wherein the prioritized load identifying unit and the non-prioritized load identifying unit respectively calculates the total power consumption using the measurements, of the power consumption by the loads, measured by the measuring unit and stored in the storage unit.

### [Advantageous Effects of Invention]

According to the present invention, the loads additionally connected to the power source device being limited beyond necessity due to the priority assigned to the loads can be prevented in a case the power consumption by the loads connected to the power source device has changed.

### [Brief Description of Drawings]

[Fig. 1] Fig. 1 is an explanatory diagram illustrating a power supply control device together with a power source supply device according to an embodiment of the present invention.
[Fig. 2] Fig. 2 is an explanatory diagram illustrating an example of load management tables during a power outage in the power supply control device according to an embodiment of the present invention.
[Fig. 3] Fig. 3 is a flow chart illustrating the connection load identifying process in the power supply control device according to an embodiment of the present invention.
[Fig. 4] Fig. 4 is a flow chart illustrating the connection load identifying process which continues from Fig. 3.
[Fig. 5] Fig. 5 is an explanatory diagram illustrating an example of the load management tables when the power consumption by the loads had declined during a power outage in the power supply control device according to an embodiment of the present invention.
[Fig. 6] Fig. 6 is a flow chart illustrating the additional load identifying process in the power supply control device according to an embodiment of the present invention.
[Fig. 7] Fig. 7 is an explanatory diagram illustrating an example of the load management tables when the power consumption by the loads had increased during a power outage in the power supply control device according to an embodiment of the present invention.
[Fig. 8] Fig. 8 is a flow chart illustrating the shut off load identifying process in the power supply control device according to an embodiment of the present invention.

### [Description of Embodiments]

Description of an embodiment of the present invention will be given in the following with reference to the drawings attached.

### (Power Supply Control Device)

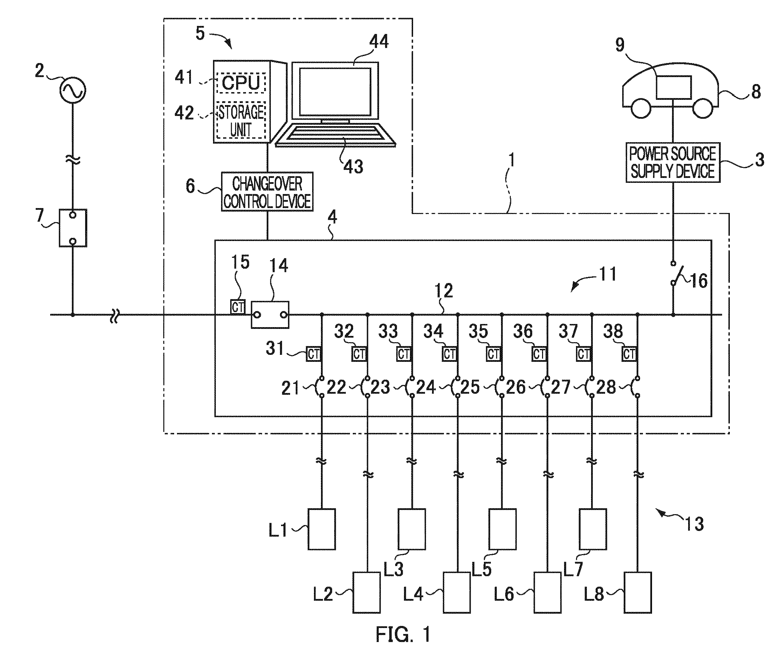

Fig. 1 illustrates a power supply control device and the like according to an embodiment of the present invention. In Fig. 1, the power supply control device 1 according to the embodiment of the present invention is a device that controls the power supply from the power source supply device 3 as the power source device to the loads L1 to L8 when power supply from the power system 2 to the loads L1 to L8 stops due to a power outage. The power supply control device 1 in the present embodiment is provided to the consumers to control the power supplied to the loads L1 to L8 of the consumers.

The power supply control device 1 includes a switchboard 4, a personal computer (hereinafter called "PC") 5 and a changeover control device 6.

The switchboard 4 has the power system 2 connected thereto via an external circuit breaker 7 and the like. Additionally, the switchboard 4 has connected thereto the power source supply device 3. The power source supply device 3 is, for example, a device which takes out the power stored in the rechargeable battery 9 of the electric vehicle 8 to supply to the switchboard 4 side.

Further, the switchboard 4 has connected thereto a plurality (e.g., eight) loads L1 to L8. The loads L1 to L8 include, for example, electrical equipment such as illuminations, fire alarms, refrigerators, air conditioners, television devices and the like.

An electric circuit 11 is formed in the switchboard 4, for selectively supplying power from the power system 2 and the power from the power source supply device 3 to each of the loads L1 to L8. The electric circuit 11 includes a trunk line 12 and the trunk line 12 has connected thereto the external circuit breaker 7 connected to the power system 2 and the power source supply device 3 in parallel to each other. Further, the trunk line 12 has a branch circuit unit 13 connected thereto.

The branch circuit unit 13 includes a plurality of lines for connecting to each of the plurality of the loads L1 to L8 to the trunk line 12, and the loads L1 to L8 are each connected in parallel to the trunk line 12 via these lines.

Further, in the branch circuit unit 13, a load switch 21 which performs changeover between a connection and a shut off between the load L1 and the trunk line 12 is connected midway the line connecting the load L1 and the trunk line 12. The load switch 21 is, for example, a line breaker. And the line connecting the load L1 and the trunk line 12 has connected thereto a current transformer (CT) 31 which measures the current flowing into the load L1 through this line. Similarly, the lines connecting each of the loads L2 to L8 to the trunk line 12 also respectively have load switches 22 to 28 and current transformers 32 to 38 connected thereto. Here, each of the current transformers 31 to 38 is a specific example of the measuring unit.

Additionally, the switchboard 4 has provided therein a power source breaker 14 which performs the changeover between the connection and shut off between the power system 2 and the trunk line 12. The power source breaker 14 is, for example, a line breaker which has attached a UVT (undervoltage release). The power source breaker 14 is usually (during operation of the power system) closed to have the power system 2 and the trunk line 12 connected, however, when the power supply from the power system 2 stops due to a power outage, the power source breaker 14 detects such event to be opened automatically and shuts off the line between the power system 2 and the trunk line 12. Further, the switchboard 4 has connected therein a current transformer 15 which measures the current flowing from the power system 2 into the trunk line 12.

An on-off switch 16 which performs a changeover between a connection and a shut off between the power source supply device 3 and the trunk line 12 is provided in the switchboard 4. The on-off switch 16 is, for example, a manual changeover switch. The on-off switch 16 is usually opened to shut off the line between the power source supply device 3 and the trunk line 12. A user can manually close the on-off switch 16 to connect the line between the power source supply device 3 and the trunk line 12.

The changeover control device 6 is a device that controls the switchboard 4 together with the PC 5, and has provided such as an interface circuit and a control circuit inside. The changeover control device 6 has connected thereto the PC 5, the current transformer 15, the power source breaker 14, the on-off switch 16, the current transformers 31 to 38 and the load switches 21 to 28. The changeover control device 6 receives from the current transformer 15 and the current transformers 31 to 38 the values of the currents measured by each of the current transformer 15 and the current transformers 31 to 38, and outputs them to the PC 5. Further the changeover control device 6 receives a trip signal outputted from the power source breaker 14 and outputs to the PC 5 a notification signal corresponding to the trip signal received. Furthermore, the changeover control device 6 detects the on or the off of the on-off switch 16 and outputs to the PC 5 a detection signal corresponding to the detection result. Even furthermore, the changeover control device 6 receives an instruction signal outputted from the PC 5 and outputs a control signal corresponding to the received instruction signal to the load switch, among the load switches 21 to 28, specified by the instruction signal. This load switch opens or closes according to the control signal. Here, the changeover control device 6 as well as the PC 5 is specific examples of the changeover control unit.

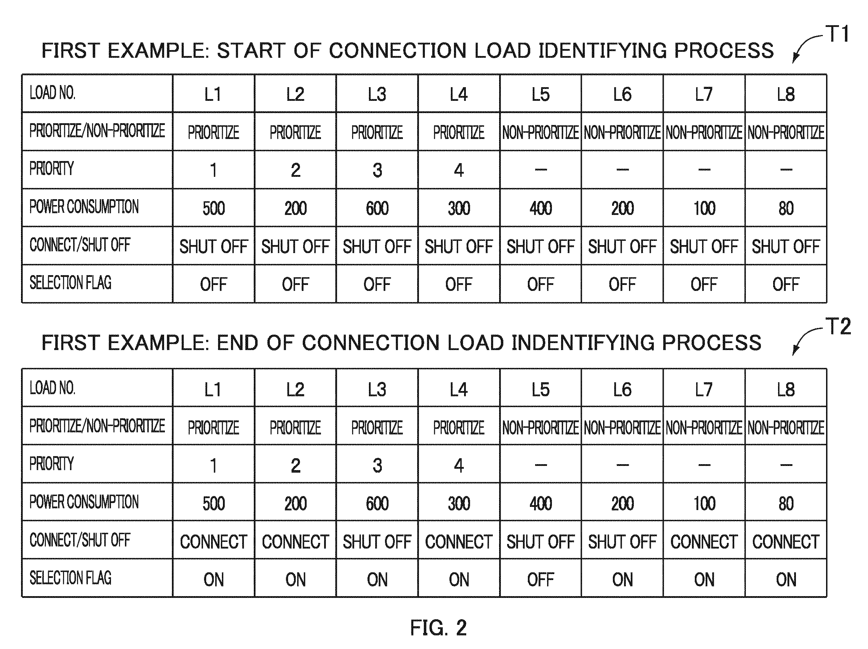

The PC 5 includes a CPU (central processing unit) 41 and a storage unit 42. Additionally, the PC 5 includes an operation input unit 43 having a keyboard, a pointing device and the like, and a information display unit 44 having a display device and the like. Further, the PC 5 has an interface (not shown) and the like for performing transmission/reception of information from the changeover control device 6. The CPU 41 performs according to a computer program which is installed in the PC 5 in advance, (a) a priority setting process, (b) a power consumption calculation process, (c) a connection load identifying process, (d) an additional load identifying process and (e) a shut off load identifying process as to be described later. The storage unit 42 is a storage device such as, for example, a hard disc drive device and a flash memory. The storage unit 42 has stored therein load management tables (see Fig. 2). Here, the PC 5 is a specific example of the priority setting unit, the power detection unit, the load identifying unit, the prioritized load identifying unit and the non-prioritized load identifying unit.

### (Load Management Table)

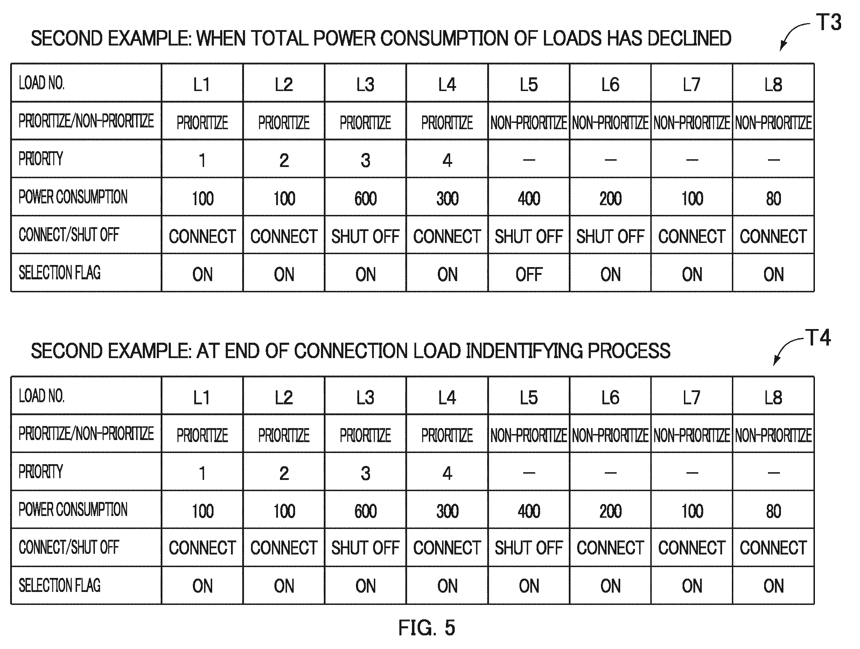

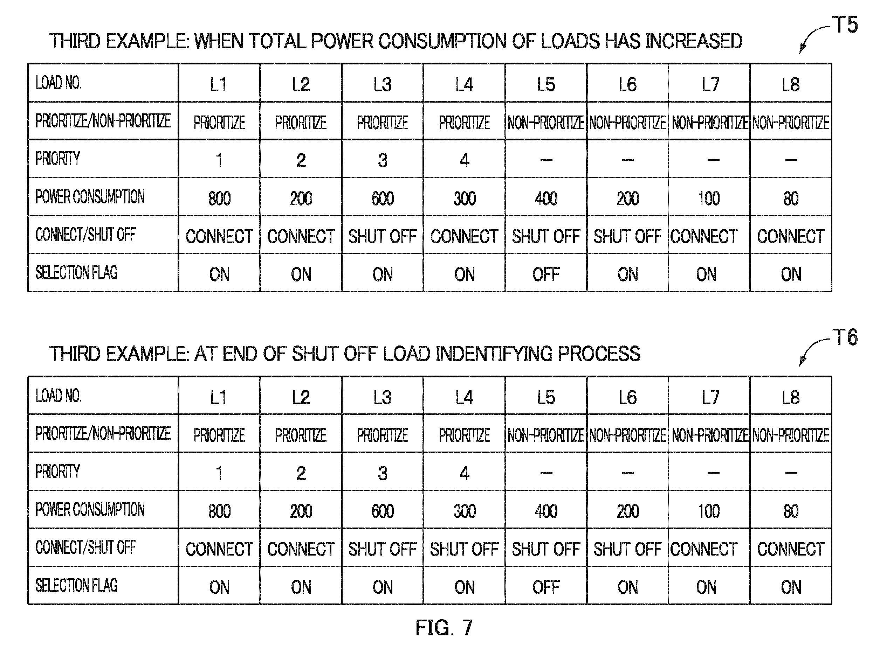

The upper table in Fig. 2 indicates an example of the load management table. In Fig. 2, the load management table T1 is a table indicating the management conditions of each of the loads L1 to L8. In the load management table T1, the "LOAD NO." row indicates information for identifying each of the loads L1 to L8. The "PRIORITIZE/NON-PRIORITIZE" row indicates information on whether each of the loads L1 to L8 are loads having set priority or loads that do not have set priority. The "PRIORITY" row indicates information on priority of each load having assigned priority. The "POWER CONSUMPTION" row indicates the power consumption values of each of the loads L1 to L8. The "CONNECT/SHUT OFF" row indicates whether each of the loads L1 to L8 are connected to or shut off from the trunk line 12. The "SELECTION FLAG" row indicates information on whether or not each of the loads L1 to L8 have been selected in the later described connection load identifying process, the additional load setting process and the shut off load setting process. And the load management tables T2 to T6 indicated in the bottom table of Fig. 2, and the tables of Figs. 5 and 7 are the same as the top load management table T1 in Fig. 2, but are load management tables at different time points and therefore each of the values recorded in the load management tables differ.

### (Priority Setting Process)

The power supply control device 1 performs the priority setting process under the control of the CPU 41 of the PC 5. The priority setting process is a process that sets the prioritize/non-prioritize and the priority of the loads L1 to L8 according to the inputs by the user.

As described later, in the connection load identifying process, the additional load identifying process and the shut off load identifying process, the load to be connected to the trunk line 12 or that shut off from the trunk line 12 is identified so that the power consumed by the loads does not exceed the upper output limit set according to the output capacity of the power source supply device 3. At this time, the loads that have assigned priority (hereinafter called "prioritized loads") and the loads that do not have assigned priority (hereinafter called "non-prioritized loads") among the loads L1 to L8 have different criteria for identifying the loads to be connected to the trunk line 12 and those to be shut off from the trunk line 12. Further, in the load identifying process, the prioritized load to be connected to the trunk line 12 or that to be shut off from the trunk line 12 is identified taking into consideration the priority assigned to each load. Being the case, the power supply control device 1 performs the priority setting process according to the input of the user to set to the loads L1 to L8 the prioritize, non-prioritize and also assign the priority of the prioritized loads, in order to be prepared for the execution of the connection load identifying process, the additional load specifying process and the shut off load identifying process.

In the priority setting process, to be specific, the CPU 41 of the PC 5 displays on the information display unit 44 of the PC 5 an input setting screen to input settings to the loads L1 to L8 on the prioritize, non-prioritize and settings on the priorities of the prioritized loads. The user can perform inputs of the settings on prioritize, non-prioritize and the settings on the priorities of the prioritized loads, for each of the loads L1 to L8 by operating the operation input unit 43 of the PC 5 while looking at the input setting screen. The settings of the loads L1 to L8 on the prioritize, the non-prioritize and the priorities of the prioritized loads input by the user are stored in the storage unit 42 as a part of the load management table (see Fig. 2).

The user can also assign priorities to all of the loads L1 to L8, or can select some loads from the loads L1 to L8 to assign priorities to the selected loads without assigning priorities to the remaining loads. Further, the user may decide not to assign priorities to all loads L1 to L8. Furthermore, the user can change the settings made to the loads L1 to L8 on the prioritize, the non-prioritize settings and the priority settings of the prioritized loads.

### (Power Consumption Calculation Process)

Additionally, the power supply control device 1 performs a power consumption calculation process under the control of the CPU 41 of the PC 5. The power consumption calculation process is a process that calculates the power consumption by the loads L1 to L8 and stores the calculated power consumption results into the storage unit 42.

The later described connection load identifying process, the additional load identifying process and the shut off load identifying process take into consideration the power consumption by the loads L1 to L8 to identify the loads to be connected to the trunk line 12 and the loads to be shut off from the trunk line 12. Therefore, the power supply control device 1 performs the power consumption calculation process to calculate the powers consumed by the loads L1 to L8. Note that the power consumption calculation process is performed even during a power outage.

The power consumption calculation process if performed in, for example, the following way. In other words, the current transformers 31 to 38 continuously measures for each load the currents flowing into the loads L1 to L8 and continuously outputs to the changeover control device 6 the current values measured. Subsequently, the changeover control device 6 outputs to the PC 5 for each load the current values output from the current transformers 31 to 38. Then the PC 5 receives these current values for the CPU 41 of the PC 5 to calculate for each load, the power consumed by the loads L1 to L8 using the current values received. The CPU 41 consecutively calculates the power consumption for each of the loads L1 to L8 and stores at a predetermined time interval (e.g., one second interval) the values of the calculated power consumption in a temporary storage area of the storage unit 42.

The power consumption values of the loads L1 to L8 are stored in the temporary storage area of the storage unit 42. The CPU 41 refers to the power consumption value of the load L1 stored in the temporary storage area of the storage unit 42 at a predetermined time interval, for example, 10 minutes, identifies the maximum power consumption value among the power consumption values of the load L1 stored for the last 10 minutes from that time, stores in a different area of the storage unit 42 as a part of the load management table (see Fig. 2) the identified power consumption value. And immediately thereafter, the CPU 41 deletes all the power consumption values of the load L1 stored in the temporary storage area of the storage unit 42. The CPU 41 performs a similar process on the power consumption values of each of the loads L2 to L8 stored in the temporary storage area of storage unit 42. As a result, the load management table indicated in Fig. 2 has recorded for each load the maximum power consumption value of the loads L1 to L8 of the last 10 minutes. The most current power consumption values recorded in the load management table are used when performing calculations of the amount of power consumption by the loads in the later described connection load identifying process, the additional load identifying process and the shut off load identifying process.

### (Connection Load Identifying Process)

Further, the power supply control device 1 performs a connection load identifying process under the control of the CPU 41 of the PC 5. The connection load identifying process is a process which identifies the load to be supplied power from the power source supply device 3 when a power outage occurs. Specifically, the connection load identifying process is a process which identifies the load to be connected to the trunk line 12 when the power system 2 is shut off from the trunk line 12 due to a power outage and the power source supply device 3 is connected to the trunk line 12.

Firstly, a basic description of the connection load identifying process will be given using a first example. The top table in Fig. 2 indicates the load management table at the start of the connection load identifying process in the first example and the bottom table in Fig. 2 indicates the load management table at the end of the connection load identifying process in the first example.

In the first example, among the loads L1 to L8, loads L1 to L4 are assigned priority by the user performing in advance a setting input and the loads L5 to L8 do not have assigned priority. Therefore, loads L1 to L4 are prioritized loads and the loads L5 to L8 are non-prioritized loads. Additionally, the prioritized loads L1, L2, L3 and L4 are assigned priorities in this order. And the power consumption by the loads L1 to L8 is 500W, 200W, 600W, 300W, 400W, 200W, 100W and 80W, respectively.

In such circumstances, when the connection load identifying process is started when a power outage occurs, all of the loads L1 to L8 are firstly shut off from the trunk line 12. The top load management table T1 in Fig. 2 indicates the condition of the load management table at this time. Description of the selection flag will be given later in detail.

Subsequently, a prioritized load is selected according to priority, and when the total power consumption by this selected prioritized load and the loads which are identified as the connection targets is not greater than the upper output limit which has been set in advance according to the output capacity of the power source supply device 3, this selected prioritized load is identified as the connection target and the prioritized load is immediately connected to the trunk line 12. Whereas this selected prioritized load is not identified as the connection target when the total power consumption of this selected prioritized load and the loads which are identified as the connection targets is greater than the upper output limit. In this case, this prioritized load is maintained in a state shut off from the trunk line 12. Such processes are repeated in a sequential manner according to priority for all of the prioritized loads. Here, the above described upper output limit is, for example, an appropriate value (e.g., 1200W) which is not greater than the power rating (e.g., 1500W) of the power source supply device 3. The reason for the upper output limit being set lower than the power rating of the power source supply device 3 is to keep the total power consumption of the connected loads from exceeding the power rating of the power source supply device 3 even when the power consumption by the loads should increase during the operation of the loads by the power from the power source supply device 3.

Next, a non-prioritized load is selected in the ascending order of power consumption and a process for identifying the selected non-prioritized load as the connection target is repeatedly performed as long as the total power consumption of this selected non-prioritized load and the loads identified as the connection targets is not greater than the above described upper output limit. And this process ends when all the non-prioritized loads are selected during the above circumstance.

A detailed description of the above two processes are as follows. Firstly, in the prioritized load identifying process, the prioritized load L1 of the highest priority is selected from the prioritized loads L1 to L4. At the stage where the prioritized load L1 is selected, there is no load which is identified as the connection target so that at this stage, the total power consumption of the selected prioritized load and the loads which are identified as the connection target becomes equal to the power consumption of the prioritized load L1 which is 500W. And this power consumption is not greater than the upper output limit of 1200W so that the prioritized load L1 is identified as the connection target to be immediately connected to the trunk line 12.

Subsequently, the prioritized load L2 of the second highest priority is selected. The load which has been identified as the connection target is the prioritized load L1 at the stage when the prioritized load L2 is selected. And the total power consumption of the prioritized load L2 and the prioritized load L1 is 700W. This power consumption is not greater than 1200W so that the prioritized load L2 is identified as the connection target to be immediately connected to the trunk line 12.

Furthermore, the prioritized load L3 of the third highest priority is subsequently selected. The loads identified as the connection targets at the stage when the prioritized load L3 is selected are the prioritized loads L1 and L2. And the total power consumption of the prioritized load L3 and the prioritized loads L1 and L2 is 1300W. Since this power consumption exceeds 1200W, the prioritized load L3 is not identified as the connection target. As a result, the prioritized load L3 is not connected to the trunk line 12 and is maintained in a state shut off from the trunk line 12.

Yet further still, the prioritized load L4 of the fourth highest priority is subsequently selected. The loads identified as the connection targets at the stage when the prioritized load L4 is selected are the prioritized load L1 and L2. And the total power consumption of the prioritized load L4 and the prioritized loads L1 and L2 is 1000W. The power consumption is not greater than 1200W so that the prioritized load L4 is identified as the connection target to be immediately connected to the trunk line 12.

Even further still, the non-prioritized load L8 of the smallest power consumption is subsequently selected from the non-prioritized loads L5 to L8. The loads identified as the connection targets at the stage when the non-prioritized load L8 is selected are the prioritized loads L1, L2 and L4. And the total power consumption of the non-prioritized load L8 and the prioritized loads L1, L2 and L4 is 1080W. This power consumption is not greater than 1200W so that the non-prioritized load L8 is identified as the connection target to be immediately connected to the trunk line 12.

Even further sill, the non-prioritized load L7 of the second smallest power consumption is subsequently selected. The loads identified as the connection targets at the stage when the non-prioritized load L7 is selected are the prioritized loads L1, L2 and L4 and the non-prioritized load L8. And the total power consumption of the non-prioritized load L7 and the prioritized loads L1, L2 and L4 together with the non- prioritized load L8 is 1180W. This power consumption is not greater than 1200W so that the non-prioritized load L7 is identified as the connection target to be immediately connected to the trunk line 12.

Even further sill, the non-prioritized load L6 of the third smallest power consumption is subsequently selected. The loads identified as the connection targets at the stage when the non-prioritized load L6 is selected are the prioritized loads L1, L2 and L4 and the non-prioritized loads L7 and L8. And the total power consumption of the non-prioritized load L6 and the prioritized loads L1, L2 and L4 together with the non-prioritized loads L7 and L8 is 1380W. Since this power consumption exceeds 1200W, the prioritized load L6 is not identified as the connection target, and is maintained in a state shut off from the trunk line 12. Then the connection load identifying process ends. The bottom load management table T2 in Fig. 2 indicates the condition of the load management table at this time.

And according to the connection load identifying process as above, the loads L1 and L2 are identified according to priority, and subsequently attempts are made to identify the next load L3 according to priority, however, since the total power consumption by the loads L1 to L3 exceeds the upper output limit when the load L3 is identified, the load L3 is not identified but is skipped and an attempt is made to identify load L4 of a lower priority. Hereby, the load L4 in addition to the loads L1 and L2 are identified for them to be connected to the trunk line 12. Therefore, more loads can be connected by the connection load identifying process compared to when the loads are simply connected according to priority. Further, since 200W remain to the power source supply device 3 when the loads L1, L2 and L4 which have assigned priority are connected to the trunk line 12 so that the loads L7 and L8 not having assigned priority can be connected within the remaining capacity. Therefore, during a power outage, the loads to be connected to the power source supply device 3 can be prevented from being limited beyond necessity due to the priorities set to the loads.

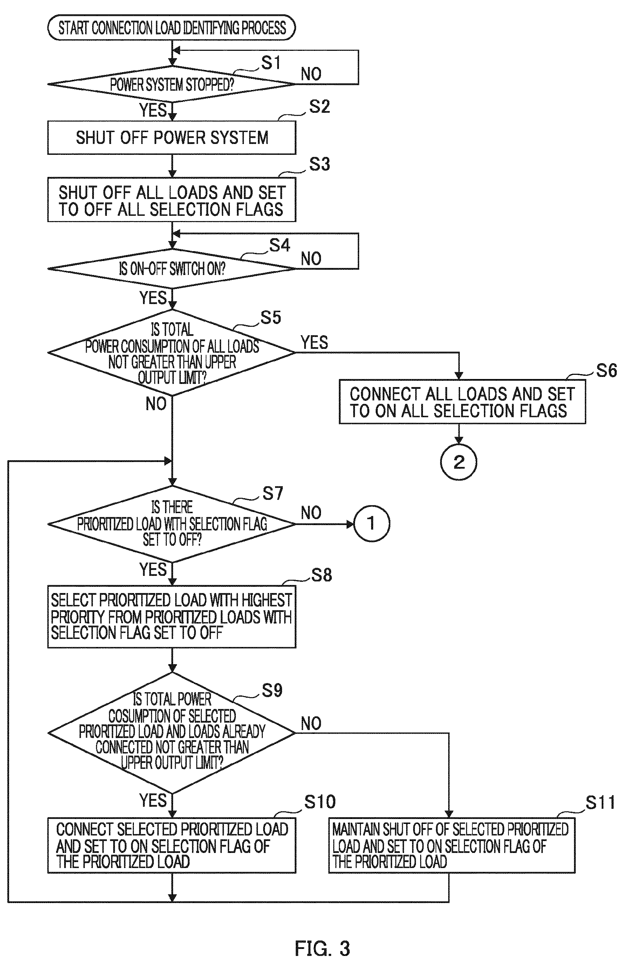

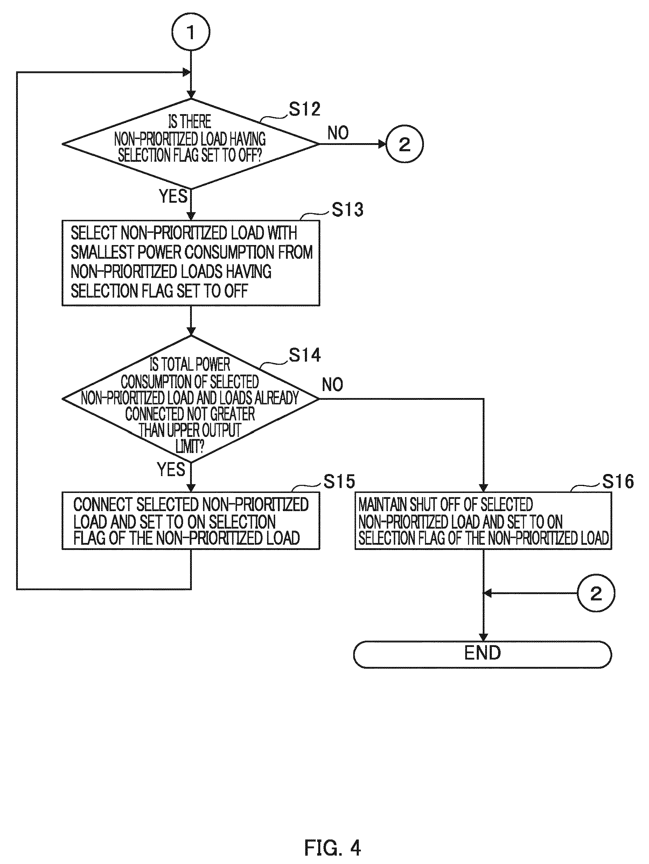

Next, a detailed description of examples on how the connection load identifying process is performed will be given. Figs. 3 and 4 are flowcharts illustrating the specific flow of the connection load identifying process. In Fig. 3, when the power supply from the power system 2 stops due to a power outage (Step S1: YES), the power source breaker 14 detects such event to open automatically and shuts off the line between the power system 2 and the trunk line 12 (Step S2).

When the power source breaker 14 is opened, a trip signal is outputted from the power source breaker 14 to the changeover control device 6 and a notification signal is outputted from the changeover control device 6 to the PC 5 according to the trip signal. The PC 5 recognizes that the power system 2 has stopped based on this notification signal. Subsequently, the PC 5 outputs to the changeover control device 6 a command signal instructing to open all the load switches 21 to 28. A control signal is outputted from the changeover control device 6 to each load switch 21 according to the command signal, and the load switches 21 to 28 are opened according to this control signal so that all the loads L1 to L8 are shut off from the trunk line 12. Further subsequently, the CPU 41 of the PC 5 sets to OFF the respective selection flags of all the loads L1 to L8 (Step S3).

Subsequently, when the user turns on the on-off switch 16 to start the power supply from the power source supply device 3, the changeover control device 6 detects such event and outputs a detection signal to the PC 5, then the CPU 41 of the PC 5 recognizes that the on-off switch 16 has been turned on based on this detection signal (Step S4: YES). Then the CPU 41 judges whether the total power consumption of all the loads L1 to L8 is not greater than the above described upper output limit (Step S5). And when the total power consumption of all the loads L1 to L8 is not greater than the upper power limit (Step S5: YES), the CPU 41 outputs to the changeover control device 6 a command signal instructing to close all the load switches 21 to 28. In response to this command signal, a control signal is outputted from the changeover control device 6 to the respective load switches 21 to 28 and the load switches 21 to 28 are closed according to this control signal for all the loads L1 to L8 to be connected to the trunk line 12. Then the CPU 41 sets to ON the respective selection flags of all the loads L1 to L8 (Step S6) and ends the connection load identifying process.

On the other hand, when the total power consumption of all the loads L1 to L8 is greater than the upper output limit (Step S5: NO), the CPU 41 judges whether or not there is a prioritized load which has the selection set to OFF (Step S7) . And when there is a prioritized load which has the selection flag set to OFF (Step S7: YES), the CPU 41 selects the prioritized load with the highest priority from the prioritized loads with their selection flags set to OFF (Step S8).

Subsequently, the CPU 41 judges whether or not the total power consumption of the prioritized load selected at Step S8 and the loads connected to the trunk line 12 by having the load switches already closed at this time is not greater than the upper output limit (Step S9). Then when the total power consumption of the prioritized load selected at Step S8 and the load connected to the trunk line 12 by having the load switches already closed at this time is not greater than the upper output limit (Step S9: YES), the CPU 41 outputs to the changeover control device 6 a command signal instructing to close the load switches corresponding to the prioritized load selected at Step S8. Then a control signal is outputted from the changeover control device 6 to this load switch in response to this command signal. Hereby, the load switch corresponding to the prioritized load selected at Step S8 is closed and the prioritized load selected at Step S8 is connected to the trunk line 12. Then the CPU 41 sets to ON the selection flag of the prioritized load selected at Step S8 (Step 10) and returns the process to Step S7.

On the other hand, when the total power consumption of the prioritized load selected at Step S8 and the loads connected to the trunk line 12 by having the load switches already closed at this time is greater than the upper output limit (Step S9: NO), the CPU 41 sets to OFF the selection flag of the prioritized load selected at Step S8 (Step 10), and returns the process to Step S7. As a result, the prioritized load selected at Step S8 is maintained in a state shut off from the trunk line 12.

Meanwhile at Step S7, when there is no prioritized load having the selection flag set to OFF (Step S7: NO), the CPU 41 judges whether or not there is a non-prioritized load having the selection flag set to OFF (Step 12), as shown in Fig. 5. And when there is a non-prioritized load having the selection flag set to OFF (Step S12: YES), the CPU 41 selects the non-prioritized load with the smallest power consumption from the non-prioritized loads having the selection flags set to OFF (Step S13).

Subsequently, the CPU 41 judges whether or not the total power consumption of the non-prioritized load selected at Step 13 and the loads connected to the trunk line 12 by having the load switches already closed at this time is not greater than the upper output limit (Step S14). And when the total power consumption of the non-prioritized load selected at Step S13 and the loads connected to the trunk line 12 by having the load switches already closed at this time is not greater than the upper output limit (Step S14: YES), the CPU 41 outputs to the changeover control device 6 a command signal instructing to close the load switch corresponding to the non-prioritized load selected at Step 13. Then a control signal is outputted from the changeover control device 6 to the load switch in response to this command signal. Hereby, the load switch corresponding to the non-prioritized load selected at Step 13 is closed and the non-prioritized load selected at Step 13 is connected to the trunk line 12. Then the CPU 41 sets to ON the selection flag of the non-prioritized load selected at Step 13 (Step S15) and returns the process to S12.

On the other hand, when the total power consumption of the non-prioritized load selected at Step 13 and the loads connect to the trunk line 12 by having the load switches already closed at this time is greater than the upper output limit (Step S14: NO), the CPU 41 sets to ON the selection flag of the non-prioritized load selected at Step 13 (Step 16) and ends the connection load identifying process. As a result, the non-prioritized load selected at Step S13 is maintained in a state shut off from the trunk line 12. Further, the non-prioritized load which was not selected in this connection load identifying process is also maintained in a state shut off from the trunk line 12.

Meanwhile, in Step S12, the connection load identifying process ends when there is no non-prioritized load having the selection flag set to OFF (Step S12: NO).

### (Additional Load Identifying Process)

The power supply control device 1 performs an additional load identifying process under the control of the CPU 41 of the PC 5. The additional load identifying process is a process which identifies the load to be additionally connected to the trunk line 12 when the power system 2 has been shut off from the trunk line 12 due to a power outage and the total power consumption by the loads connected to the trunk line 12 has declined while the power source supply device 3 is in a state connected to the trunk line 12. The additional load identifying process is started immediately after the connection load identifying process has ended by a power outage and is repeated, for example, alternately between the shut off load identifying process during the power outage.

Firstly, a basic description of the additional load identifying process will be given using the second example. The top table in Fig. 5 indicates the load management table in the second example when the total power consumption by the loads connected to the trunk line 12 has declined during a power outage. And the bottom table in Fig. 5 indicates the load management table in the second example at the time the additional load identifying process has ended.

The second example is an example of when the power consumption by the loads connected to the trunk line 12 has declined after the aforementioned first example. In other words, as indicated in the bottom load management table T2 in Fig. 2, the loads L1 to L4 are prioritized loads and the loads L5 to L8 are non-prioritized loads where the prioritized loads L1, L2, L3 and L4 are assigned priorities in this order and the power consumption by the loads L1 to L8 are as indicated in the load management table T2. And as a result of the aforementioned connection load identifying process being performed due to a power outage, the loads L1, L2, L3, L4, L7 and L8 are connected to the trunk line 12 and the loads L3, L5 and L6 are shut off from the trunk line 12, at the point the connection load identifying process has ended. And a case is assumed where the power outage continues under this condition and the total power consumption by the loads L1, L2, L4, L7 and L8 which are connected to the trunk line 12 has declined during the power outage.

In the additional load identifying process, when the total power consumption by the loads connected to the trunk line 12 has declined, such event is detected. And according to this detection, one prioritized load is selected according to the priority set among the prioritized loads which are shut off from the trunk line 12. Subsequently, when the total power consumption of the selected prioritized load and the loads connected to the trunk line 12 at this time is not greater than the above described upper output limit of the power source supply device 3, the selected prioritized load is identified as the connection target to be immediately connected to the trunk line 12. On the other hand, when the total power consumption of the selected prioritized load and the loads connected to the trunk line 12 at this time is greater than the upper output limit, the selected prioritized load is not identified as the connection target. In this case, the prioritized load is maintained in a state shut off from the trunk line 12. Such process is repeatedly performed for all of the prioritized loads which are shut off from the trunk line 12.

Next, one non-prioritized load is selected in the ascending order of power consumption from the non-prioritized loads shut off from the trunk line 12, and a process for identifying the selected non-prioritized load as the connection target is repeatedly performed as long as the total power consumption of the selected non-prioritized load and the loads connected to the trunk line 12 is not greater than the upper output limit. Here, this process ends when all the non-prioritized loads are selected during this process.

Description of the two processes is specifically given once again using the example indicated in the top table in Fig. 5. Here, assuming that the load L1 connected to the trunk line 12 decreases from 500W to 100w and the load L2 decreases from 200W to 100W at the same time where as a result, the total power consumption by the loads L1, L2, L4, L7 and L8 connected to the trunk line 12 decreases from 1180W to 680W. The top load management table T3 in Fig. 5 indicates the condition of the load management table at this time.

In this case, the total power consumption by the loads L1, L2, L4, L7 and L8 which are connected to the trunk line 12 is detected to have decreased. And corresponding to such circumstance, the prioritized load L3 is selected as the prioritized load with the highest priority from the prioritized loads shut off from the trunk line 12. The loads connected to the trunk line 12 at the stage where the prioritized load L3 has been selected are loads L1, L2, L4, L7 and L8. And the total power consumption of the prioritized load L3 and the loads L1, L2, L4, L7 and L8 is 1280W. This power consumption exceeds the upper output limit being 1200W so that the prioritized load L3 is not identified as the connection target and is maintained in a state shut off from the trunk line 12.

Subsequently, the non-prioritized load L6 which has the smallest power consumption is selected from the non-prioritized loads L5 and L6 which are shut off from the trunk line 12. The loads connected to the trunk line 12 at the stage when the non-prioritized load L6 has been selected are prioritized loads L1, L2 and L4 as well as non-prioritized loads L7 and L8. And the total power consumption of the non-prioritized load L6 together with the prioritized loads L1, L2 and L4 and the non-prioritized loads L7 and L8 is 880W. This power consumption is not greater than 1200W so the non-prioritized load L6 is identified as the connection target to be immediately connected to the trunk line 12.

Furthermore, the non-prioritized load L5 shut off from the trunk line 12 is subsequently selected. The loads connected to the trunk line 12 at the stage when the non-prioritized load L5 has been selected are prioritized loads L1, L2 and L4 as well as non-prioritized loads L6 to L8. And the total power consumption of the non-prioritized load L5 together with the prioritized loads L1, L2 and L4 and the non-prioritized loads L6 to L8 is 1280W. This power consumption exceeds 1200W so the non-prioritized load L5 is not identified as the connection target and is maintained shut off from the trunk line 12. The bottom load management table T4 in Fig. 5 indicates the load management table at this time.

According to the additional load identifying process given above, when there is power remaining to the power source supply device 3 due to a decline in the power consumption by the loads L1 and L2, although load L3 whose power consumption exceeds the amount of power remaining cannot be additionally connected, load L6 whose power consumption is within the power remaining can be additionally connected. In this way, power can be supplied to as many loads as possible within in the limit of the power remaining in the power source supply device 3 according to the additional load identifying process. Therefore, effective use of the power supplied by the power source supply device 3 can be encouraged while improving the convenience of the users by operating as many loads as possible.

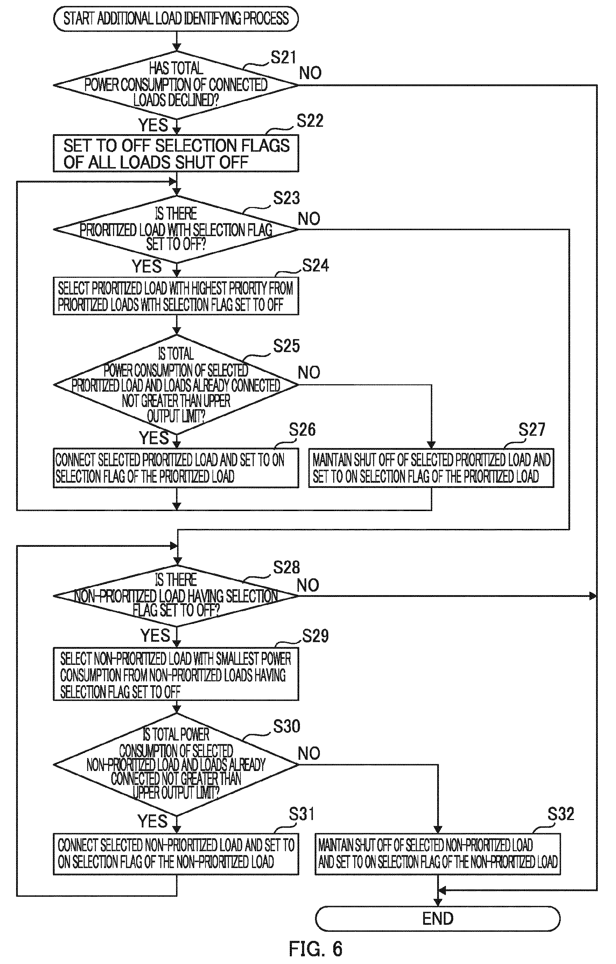

Next, a detailed description of an example implementing the additional load identifying process will be given. Fig. 6 is a flow chart illustrating a specific flow of the additional load identifying process. In Fig. 6, the power system 2 is shut off from the trunk line 12 due to a power outage and while the power source supply device 3 is connected to the trunk line 12, the CPU 41 of the PC 5 detects that the total power consumption by the loads connected to the trunk line 12 has declined (Step 21). This detection is performed in, for example, the following way. In other words, as mentioned above, the maximum power consumption value during a predetermined time is stored in the storage unit 42 for each of the loads L1 to L8. While the maximum power consumption value is updated once every predetermined time given above for each of the loads L1 to L8, the storage unit 42 not only stores the values after update but also stores the values before update of the maximum power consumption values for the loads L1 to L8. The CPU 41 reads out from the storage unit 42 the values before and after update of the maximum power consumption values for each of the loads connected to the trunk line 12, and detects the decline in the total power consumption by the loads connected to the trunk line 12 based on the difference between the two values.

When detecting that the total power consumption by the loads connected to the trunk line 12 has declined (Step S21: YES), the CPU 41 sets the selection flags to OFF for all the loads shut off from the trunk line 12 (Step S22).

Subsequently, the CPU 41 judges whether or not there is a prioritized load having the selection flag set to OFF (Step S23). When there is a prioritized load which has the selection flag set to OFF (Steps S23: YES), the CPU 41 selects the prioritized load with the highest priority from the prioritized loads having their selection flags set to OFF (Step S24).

Further, the CPU 41 subsequently judges whether or not the total power consumption of the prioritized load selected at step S24 and the loads connected to the trunk line 12 by having the load switches already closed at this time is not greater than the upper output limit (Step S25). Then when the total power consumption of the prioritized load selected at Step S24 and the loads connected to the trunk line 12 by having the load switches already closed at this time is not greater than the upper output limit (Step S25: YES), the CPU 41 outputs to the changeover control device 6 a command signal instructing to close the load switch corresponding to the prioritized load selected at Step S24. Then a control signal is outputted from the changeover control device 6 to the load switch in response to this command signal. Hereby, the load switch corresponding to the prioritized load selected at Step S24 is closed and the prioritized load selected at Step S24 is connected to the trunk line 12. Then the CPU 41 sets to ON the selection flag of the prioritized load selected at Step S24 (Step 26) and returns the process to Step S23.

On the other hand, when the total power consumption of the prioritized load selected at Step S24 and the loads connected to the trunk line 12 by having the load switches already closed at this time is greater than the upper output limit (Step S25: NO), the CPU 41 sets to ON the selection flag of the prioritized load selected at Step S24 (Step 27), and returns the process to Step S23. As a result, the prioritized load selected at Step S24 is maintained in a state shut off from the trunk line 12.

Meanwhile at Step S23, when there is no prioritized load having the selection flag set to OFF (Step S23: NO), the CPU 41 judges whether or not there is a non-prioritized load having the selection flag set to OFF (Step 28). And when there is a non-prioritized load having the selection flag set to OFF (Step S28: YES), the CPU 41 selects the non-prioritized load with the smallest power consumption from the non-prioritized loads having the selection flags set to OFF (Step S29).

Subsequently, the CPU 41 judges whether or not the total power consumption of the non-prioritized load selected at Step 29 and the loads connected to the trunk line 12 by having the load switches already closed at this time is not greater than the upper output limit (Step S30). And when total power consumption of the non-prioritized load selected at Step S29 and the loads connected to the trunk line 12 by having the load switches already closed at this time is not greater than the upper output limit (Step S30: YES), the CPU 41 outputs to the changeover control device 6 a command signal instructing to close the load switch corresponding to the non-prioritized load selected at Step 29. Then a control signal is outputted from the changeover control device 6 to the load switch in response to this command signal. Hereby, the load switch corresponding to the non-prioritized load selected at Step 29 is closed and the non-prioritized load selected at Step 29 is connected to the trunk line 12. Then the CPU 41 sets to ON the selection flag of the non-prioritized load selected at Step 29 (Step S31) and returns the process to S28.

On the other hand, when the total power consumption of the non-prioritized load selected at Step 29 and the loads connect to the trunk line 12 by having the load switches already closed at this time is greater than the upper output limit (Step S30: NO), the CPU 41 sets to ON the selection flag of the non-prioritized load selected at Step 29 (Step 32) and ends the additional load identifying process. As a result, the non-prioritized load selected at Step S29 is maintained in a state shut off from the trunk line 12.

Meanwhile, in Step S28, the additional load identifying process ends when there is no non-prioritized load having the selection flag sets to OFF (Step S28: NO).

### (Shut Off Load Identifying Process)

The power supply control device 1 performs a shut off load identifying process under the control of the CPU 41 of the PC 5. The shut off load identifying process is a process which identifies the load to be shut off from the trunk line 12 when the power system 2 has been shut off from the trunk line 12 due to a power outage and the total power consumption by the loads connected to the trunk line 12 has increased to exceed the upper output limit of the power source supply device 3 while the power source supply device 3 is in a state connected to the trunk line 12. Further in the shut off load identifying process, after a load is shut off from the trunk line 12, an attempt is made to additionally connect a load with a lesser power consumption among the loads shut off from the trunk line 12 at this time, in response to the total power consumption by the loads connected to the trunk line 12 increasing to exceed the upper output limit. The shut off load identifying process is started immediately after the connection load identifying process has ended in a power outage and is repeated, for example, alternately between the additional load identifying process during the power outage.

Firstly, a basic description of the connection load identifying process will be given using the third example. The top table in Fig. 7 indicates the load management table when the total power consumption by the loads connected to the trunk line 12 has increased during a power outage in the third example. And the bottom table in Fig. 7 indicates the load management table at the time the connection load identifying process has ended in the third example.

The third example is an example of when the power consumption by the loads connected to the trunk line 12 has increased after the aforementioned first example. In other words, as indicated in the bottom load management table T2 in Fig. 2, the loads L1 to L4 are prioritized loads and the loads L5 to L8 are non-prioritized loads where the prioritized loads L1, L2, L3 and L4 are assigned priorities in this order and the power consumption by the loads L1 to L8 are as indicated in the load management table T2. And as a result of the aforementioned connection load identifying process being performed due to a power outage, the loads L1, L2, L3, L4, L7 and L8 are connected to the trunk line 12 and the loads L3, L5 and L6 are shut off from the trunk line 12, at the point the connection load identifying process has ended. And a case is assumed where the power outage continues under this condition and the total power consumption by the loads L1, L2, L4, L7 and L8 which are connected to the trunk line 12 has increased to exceed the upper output limit of the power source supply device 3 during the power outage.

In the shut off load identifying process, when the total power consumption by the loads connected to the trunk line 12 has increased to exceed the upper output limit, such event is detected and at this time, and when a non-prioritized load is included in the loads connected to the trunk line 12, the non-prioritized load with the largest power consumption is identified as the shut off target from the non-prioritized loads connected to the trunk line 12 to be immediately shut off from the trunk line 12.

Meanwhile, when the loads connected to the trunk line 12 are all prioritized load under a circumstance where the total power consumption by the loads connected to the trunk line 12 exceeds the upper output limit, the prioritized load of the lowest priority is selected as the shut off target from the prioritized loads connected to the trunk line 12, to be immediately shut off from the trunk line 12.

The aforementioned additional load identifying process is performed when the total power consumption by the loads connected to the trunk line 12 becomes lower than the upper output limit due to the above shut off of the load, and a load is additionally connected to the trunk line 12 so that total power consumption by the loads connected to the main lie 12 and the load additionally connected does not exceed the upper output limit.

Description of the three processes is specifically given once again using the example indicated in the top table in Fig. 7. Here, assuming that the load L1 connected to the trunk line 12 increases from 500W to 800w and as a result, the total power consumption by the loads L1, L2, L4, L7 and L8 connected to the trunk line 12 increases from 1180W to 1480W to exceed 1200W being the upper output limit. The top load management table T5 in Fig. 7 indicates the condition of the load management table at this time.

In this case, the total power consumption by the loads L1, L2, L4, L7 and L8 which are connected to the trunk line 12 is detected to have increased to exceed 1200W being the upper output limit. At this time, the non-prioritized loads L7 and L8 connected to the trunk line 12 are included so that the non-prioritized load L7 having the largest power consumption is identified as the shut off target between the non-prioritized loads L7 and L8 to be immediately shut off from the trunk line 12.

Since the power consumption still exceeds 1200W even when the total power consumption by the loads connected to the trunk line 12 declines to 1380W due to the shut off of the non-prioritized load L7, the non-prioritized load L8 with the largest power consumption among the non-prioritized loads connected to the trunk line 12 at this stage is identified as the shut off target to be immediately shut off from the trunk line 12.

Although the total power consumption by the loads connected to the trunk line 12 declines to 1300W due to the shut off of the non-prioritized load L8, the power consumption still exceeds 1200W. And the loads L1, L2 and L4 which are connected to the trunk line 12 at this stage are all prioritized loads. In this case, the load L4 having the lowest priority is identified as the shut off target among the prioritized loads L1, L2 and L4 to be immediately shut off from the trunk line 12.

The total power consumption by the loads connected to the trunk line 12 declines to 1000W due to the shut off of the prioritized load L4, and is no longer greater than 1200W. Since there is a difference of 200W between the total power consumption by the loads connected to the trunk line 12 and the upper output limit at this stage, a load which has power consumption not greater than 200W can be additionally connected to the trunk line 12. Being the case, the aforementioned additional load identifying process is performed and the non-prioritized loads L7 and L8 are additionally connected as a result thereof. The bottom load management table T6 in Fig. 7 indicates the condition of the load management table at this time.

According to the shut off load identifying process given above, when the power consumption of load L1 increases to exceed the upper output limit, not only are the loads L4, L7 and L8 shut off from the trunk line 12 to reduce the power consumption by the loads connected to the trunk line 12 to an amount not greater than the upper output limit, the loads L7 and L8 can be thereafter connected once again on condition that the power consumption thereby does not exceed the power remaining in the power source supply device 3. According to the shut off load identifying process in this way, as many loads as possible can be connected to the power source supply device 3 within the range of the power remaining in the power source supply device 3 while resolving the excess power consumed by the loads connected to the power source supply device 3. Therefore, effective use of the power supplied by the power source supply device 3 can be encouraged while improving the convenience of the users by operating as many loads as possible.

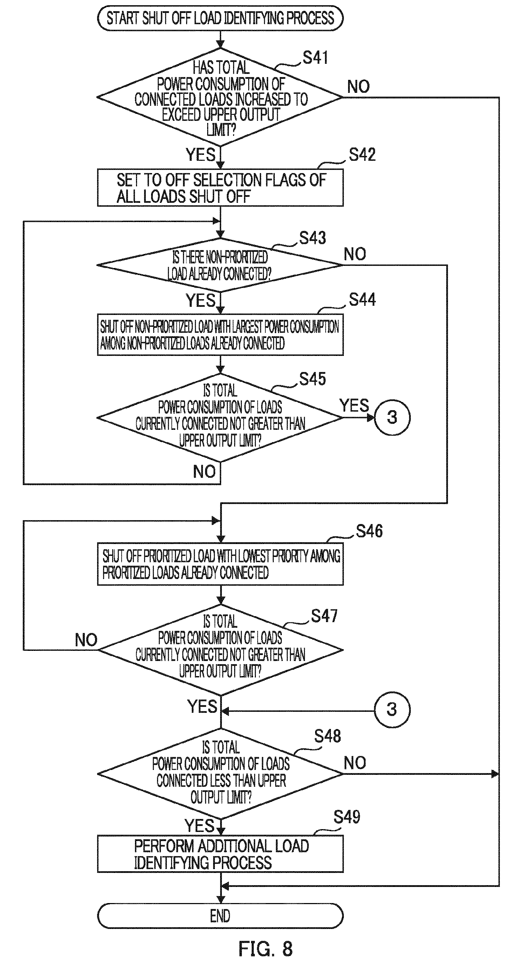

Next, a detailed description of an example implementing the shut off load identifying process will be given. Fig. 8 is a flow chart illustrating the specific flow of the shut off load identifying process. In Fig. 8, the power system 2 is shut off from the trunk line 12 due to a power outage and while the power source supply device 3 is connected to the trunk line 12, the CPU 41 of the PC 5 detects that the total power consumption by the loads connected to the trunk line 12 has increased to exceed the upper output limit (Step S41: YES). The method of detecting the increase in the total power consumption by the loads connected to the trunk line 12 is the same as the method of detection of decline in the total power consumption by the loads connected to the trunk line 12, and is as described above. Subsequently, the selection flags for all the loads shut off from the trunk line 12 are set to OFF (Step S42).

Subsequently, the CPU 41 judges whether or not there is a non-prioritized load in the loads connected to the trunk line 12 (Step S43). When there is a non-prioritized load in the loads connected to the trunk line 12 (Step 43: YES), the CPU 41 shuts off from the trunk line 12 the non-prioritized load with the largest power consumption among the non-prioritized loads connected to the trunk line 12 (Step 44). Specifically, the CPU 41 outputs to the changeover control device 6 a command signal instructing to open the load switch corresponding to this non-prioritized load. A control signal is output from the changeover control device 6 to the load switch according to the command signal and the load switch is opened according to this control signal so that this non-prioritized load is shut off from the trunk line 12.

Further, the CPU 41 subsequently judges whether or not the total power consumption by the loads connected to the trunk line 12 at the stage when the non-prioritized load is shut off at Step 44 is not greater than the upper output limit (Step 45). When the total power consumption by the loads connected to the trunk line 12 in not greater than the upper output limit (Step 45: YES), the CPU 41 advances the step to Step S48. On the other hand, when the total power consumption by the loads connected to the trunk line 12 is greater than the upper output limit (Step S45: NO), the CPU 41 returns the process to Step 43.

Meanwhile, when there is no non-prioritized load in the loads connected to the trunk line 12 in Step 43 (Step S43: NO), the CPU 41 shuts off from the trunk line 12 the prioritized load with the lowest priority among the prioritized loads connected to the trunk line 12, since the loads connected to the trunk line 12 are only prioritized loads (Step 46). In other words, the CPU 41 outputs to the changeover control device 6 a command signal instructing to open the load switch corresponding to this prioritized load. Then a control signal is outputted from the changeover control device 6 to this load switch in response to this command signal. Hereby, the load switch is opened and this prioritized load is shut off from the trunk line 12.

Subsequently, the CPU 41 judges whether or not the total power consumption by the loads connected to the trunk line 12 at the stage when the prioritized load is shut off at Step 46 is not greater than the upper output limit (Step 47). When the total power consumption by the loads connected to the trunk line 12 is greater than the upper output limit (Step 47: NO), the CPU 41 returns the process to Step S46. On the other hand, when the total power consumption by the loads connected to the trunk line 12 is not greater than the upper output limit (Step S47: YES), the CPU 41 advances the process to Step 48.

Further, subsequently in Step 48, the CPU 41 judges whether the total power consumption by the loads connected to the trunk line 12 at this stage is less than the upper output limit and when the total power consumption by the loads connected to the trunk line 12 is less than the upper output limit (Step S48: YES), the CPU 41 executes the additional load identifying process (Steps S22 to S32 in Fig. 6) (Step 49). Then the CPU 41 ends the shut off load identifying process.

As described above, according to the power supply control device 1 of the present invention, the loads additionally connected or reconnected to the trunk line 12 can be prevented from being limited beyond necessity due to the priority assigned to the loads, in a case the power consumption by the loads connected to the trunk line 12 have changed during a power outage. Hereby, as many loads as possible can be connected within the output capacity of the power source supply device 3 so to encourage effective use of the power supplied by the power source device 3 and to improve the convenience of the users by operating as many loads as possible.

Further, according to the power supply control device 1, the actual power consumption by the loads L1 to L8 is acquired with the current transformers 31 to 38 and then stored, so that in the connection load identifying process, the additional load identifying process and the shut off load identifying process, the acquired actual power consumption of these loads L1 to L8 is used to judge whether connection to or shut off from the trunk line 12 is to be performed for the loads. Therefore, connection and shut off of the loads can be performed according to the specific circumstances of the loads L1 to L8 thereby realizing a flexible and a highly accurate power supply control according to various circumstances.

In the aforementioned embodiment, an example of the power source device was given using the power source supply device 3 which takes out power stored in the rechargeable battery 9 of an electric vehicle 8 to supply to the switchboard 4 side, however, the present invention is not limited to such. For example, the rechargeable battery or the power generator and the like can be used as the power source device.

Further in the connection load identifying process, the additional load identifying process and the shut off load identifying process in the aforementioned embodiment, examples were given where the loads were immediately connected to the trunk line 12 or where the loads were shut off from the trunk line 12 each time the loads were identified as the connection target, the additional connection target or the shut off target, however, the present invention is not limited to such. For example, all the identified loads may be connected to the trunk line 12 after completing identification of all the loads to be connected to the trunk line 12 in the connection load identifying process, or all the identified loads may be connected to the trunk line 12 after completing identification of all the loads to be additionally connected to the trunk line 12 in the additional load identifying process. Further, connection to or shut off from the trunk line 12 can be performed for all the identified loads after completing identification of all the loads to be shut off from the trunk line 12 or all the loads to be reconnected to the trunk line 12 in the shut off load identifying process.

Furthermore, examples of performing the additional load identifying process and the shut off load identifying process during a power outage was given in the aforementioned embodiment, however, the present invention is not limited to such. The additional load identifying process and the shut off load identifying process may be performed during the power system is stopped for reasons besides a power outage, or the additional load identifying process and the shut off load identifying process may be performed using the upper limit value of the power supplied by the power system instead of the upper output limit of the power source supply device during operation of the power system.

Even further, the present invention can be appropriately changed within the spirit and scope of the invention which can be understood from the claims and the entire specification, and a power supply control device to which such changes are made is also within the technical principles of the present invention.

### [Reference Signs List]

- 1: power supply control device
- 2: power system
- 3: power source supply device (power source device)
- 4: switchboard
- 5: personal computer (changeover control unit)
- 6: changeover control device (changeover control unit)
- 7: external circuit breaker
- 11: electric circuit (circuit)
- 12: trunk line
- 13: branch circuit unit
- 15: current transformer
- 21-28: load switch (switch)
- 31-38: current transformer (measuring unit)
- 41: CPU (priority setting unit, power detection unit, load identifying unit, prioritized load identifying unit, non-prioritized load identifying unit)
- 42: storage unit
- L1-L8: load

## Claims

1. A power supply control device that controls power supply from a power source device to a plurality of loads comprising:
a circuit configured to parallely connect the plurality of loads to the power source device;
a plurality of switches provided to the circuit, the switches being configured to respectively switch between a connection and a shut off between the power source device and the plurality of loads;
a priority setting unit configured to assign priorities to the plurality of loads;
a power detection unit configured to detect a change in a total power consumption by loads that are connected to the power source device among the plurality of loads;
a load identifying unit configured to repeatedly perform a load identifying process on all loads shut off from the power source device among the plurality of loads, based on a detection result of the power detection unit, the load identifying process selecting one load according to the priority when the total power consumption by the loads connected to the power source device has decreased, identifying the selected load as a connection target when a total power consumption by the selected load, a load that is already identified as a connection target and the loads that are connected to the power source device is not greater than an upper output limit that is set according to an output capacity of the power source device, and does not identify the selected load as the connection target when the total power consumption by the selected load, the load that is already identified as the connection target and the loads that are connected to the power source device is greater than the upper output limit; and
a changeover control unit configured to control a changeover of the switch corresponding to the load that is identified as the connection target by the load identifying unit and to connect to the power source device the load that is identified as the connection target.

2. The power supply control device according to claim 1, wherein
when the detection result of the power detection unit indicates that the total power consumption by the loads connected to the power source device has increased to exceed the upper output limit, the load identifying unit identifies as a shut off target a load with a lowest priority among the loads that are connected to the power source device and
the changeover control unit controls changeover of the switch that corresponds to the load that is identified as the shut off target by the load identifying unit and shuts off from the power source device the load that is identified as the shut off target.

3. The power supply control device according to claim 2, wherein
when the total power consumption by the loads that are connected to the power source device after the load has been shut off from the power source device by the changeover control unit is less than the upper output limit, the load identifying unit performs the load identifying process and the changeover control unit connects to the power source device the load that is identified as the connection target by the load identifying process.

4. The power supply control device according to any one of claims 1 through 3, further comprising
a measuring unit configured to measure the power consumption by the loads and
a storage unit configured to store measurements, of the power consumption by the loads, measured by the measuring unit wherein
the load identifying unit calculates the total power consumption using the measurements, of the power consumption by the loads, measured by the measuring unit and stored in the storage unit.

5. A power supply control device that controls power supply from a power source device to a plurality of loads comprising:
a circuit configured to parallely connect the plurality of loads to the power source device;
a plurality of switches provided to the circuit, the switches being configured to respectively switch between a connection and a shut off between the power source device and the plurality of loads;
a priority setting unit configured to set as prioritized loads to a number of loads of the plurality of loads, set as non-prioritized loads to a remainder of the plurality of loads and assign priorities to only the prioritized loads;
a power detection unit configured to detect a change in a total power consumption by loads that are connected to the power source device among the plurality of loads;
a prioritized load identifying unit configured to repeatedly perform a prioritized load identifying process on all prioritized loads shut off from the power source device, based on a detection result of the power detection unit, the prioritized load identifying process selecting one prioritized load according to the priority when the total power consumption by the loads connected to the power source device has decreased, identifying the selected prioritized load as a connection target when a total power consumption by the selected prioritized load, a prioritized load that is already identified as a connection target and the loads that are connected to the power source device is not greater than an upper output limit that is set according to an output capacity of the power source device, and does not identify the selected prioritized load as the connection target when the total power consumption by the selected prioritized load, the prioritized load that is already identified as the connection target and the loads that are connected to the power source device is greater than the upper output limit;
a non-prioritized load identifying unit configured to repeatedly perform a non-prioritized load identifying process that is performed, after the prioritized load identifying process, on all the prioritized loads shut off from the power source device by the prioritized load identifying unit, the non-prioritized load identifying process selecting in ascending order of power consumption one non-prioritized load from the non-prioritized loads shut off from the power source device and identifying the selected non-prioritized load as the connection target as long as a total power consumption of the selected non-prioritized load, the load that is already identified as the connection target and the loads that are connected to the power source device is not greater than the upper output limit; and
a changeover control unit configured to control a changeover of the switch corresponding to the loads that are identified as the connection targets by the prioritized load identifying unit and the non-prioritized load identifying unit, and to connect to the power source device the loads that are identified as the connection targets.

6. The power supply control device according to claim 5, wherein
when the detection result of the power detection unit indicates that the total power consumption by the loads connected to the power source device has increased to exceed the upper output limit, the non-prioritized load identifying unit identifies among the non-prioritized loads connected to the power source device a non-prioritized load with a largest power consumption as a shut off target when the non-prioritized load is included in the loads connected to the power source device, and
the changeover control unit controls changeover of the switch that corresponds to the non-prioritized load that is identified as the shut off target by the non-prioritized load identifying unit and shuts off from the power source device the non-prioritized load that is identified as the shut off target.

7. The power supply control device according to claim 5 or 6, wherein
when the detection result of the power detection unit indicates that the total power consumption by the loads connected to the power source device has increased to exceed the upper output limit, the prioritized load identifying unit identifies among the prioritized loads connected to the power source device a prioritized load with a lowest priority as a shut off target when the loads that are connected to the power source device are all the prioritized loads, and
the changeover control unit controls changeover of the switch that corresponds to the prioritized load that is identified as the shut off target by the prioritized load identifying unit and shuts off from the power source device the prioritized load that is identified as the shut off target.

8. The power supply control device according to claim 7, wherein
when the total power consumption by the loads that are connected to the power source device after the load has been shut off from the power source device by the changeover control unit is not greater than the upper output limit, the prioritized load identifying unit and the non-prioritized load identifying unit respectively performs the prioritized load identifying process and the non-prioritized load identifying process, and the changeover control unit connects to the power source device the loads respectively identified as connection targets by the prioritized load identifying process and the non-prioritized load identifying process.

9. The power supply control device according to any one of claims 5 through 8, further comprising
a measuring unit configured to measure the power consumption by the loads and
a storage unit configured to store measurements, of the power consumption by the loads, measured by the measuring unit wherein
the prioritized load identifying unit and the non-prioritized load identifying unit respectively calculates the total power consumption using the measurements, of the power consumption by the loads, measured by the measuring unit and stored in the storage unit.
